# EUROPEAN PATENT APPLICATION

(11) **EP 1 306 602 A1**
(43) Date of publication of application: **02.05.2003**
(21) Application number: 01203987.1
(22) Date of filing: 23.10.2001
(51) Int. Cl.: F16L 47/04

(54) **Tensively strong coupling with blocking bush**

(71) Applicant: H.A. Prince Beheer Bergen op Zoom B.V., 4690 AB Tholen (NL)
(72) Inventor: Prince, Hendrikus Andreas, 4624 CP Bergen op Zoom (NL)
(74) Representative: Hoorweg, Petrus Nicolaas

(57) **Abstract**

A device for coupling in tensively strong manner two mutually in line, tubular ends of pipes for gas or liquid, which device comprises a sleeve with a screw thread pushed with clearance fit over that end in addition to a nut ring embodied with a co-acting screw thread and having an inner periphery narrowing towards the outside for receiving a split clamping ring, characterized by a blocking bush for arranging in the or each tubular end which in the unused situation has a shape differing from the circular cross-section such that the outward pointing parts lie at a diameter which is equal to the maximum permissible outer diameter of the plastic tube, such as HDPE, minus the minimum permissible wall thickness thereof, while the parts lying further inward lie at a diameter which corresponds with a minimum permissible outer diameter minus a maximum permissible wall thickness, whereby the tensile strength is considerably increased.

## Description

The invention relates to a device for coupling in tensively strong manner two mutually in line, tubular ends of pipes for gas or liquid, which device comprises a sleeve with a screw thread pushed with clearance fit over that end in addition to a nut ring embodied with a co-acting screw thread and having an inner periphery narrowing towards the outside for receiving a split clamping ring.

Such a tensively strong coupling is described in the older European application 0200414.1 in the name of applicant. The object of the invention is to increase the resistance of the tube ends for coupling, so that after possible creep or deformation of the plastic tube material, pulling loose of the coupling can be prevented, even after years of use.

The tensively strong coupling according to the invention is distinguished by a blocking bush for arranging in the or each tubular end which in the unused situation has a shape differing from the circular cross-section such that the outward pointing parts lie at a diameter which is equal to the maximum permissible outer diameter of the plastic tube, such as HDPE, minus the minimum permissible wall thickness thereof, while the parts lying further inward lie at a diameter which corresponds with a minimum permissible outer diameter minus a maximum permissible wall thickness.

Owing to the non-round shape of the blocking bush the ever-present tolerance differences in the inner diameter of the tube can hereby be absorbed. The blocking bush ensures an effective protection of the tube in extreme situations and, depending on the possibly occurring extreme tensile forces, the bush will eventually make full contact with the inner wall of the tubular end. This is in order to prevent the plastic tube being pulled from the sleeve.

Above mentioned and other features of the blocking bush are further elucidated hereinbelow with a figure description of a number of embodiments. In the drawing:
figure 1 shows a perspective view of two mutually abutting tubular ends, around which is arranged a tensively strong coupling device according to the invention,
figure 2 shows a perspective view corresponding with figure 1 wherein the components are exploded,
figures 3A and 3B show in each case a cross-section of a first embodiment of the blocking bush according to the invention,
figure 4 shows a blocking bush of figure 3 mounted in a tubular end,
figures 5 and 6 show two cross-sections corresponding with figure 3 of two variants thereof.

Corresponding components are designated in the figures with the same reference numerals.

Each tubular end lying mutually in line is designated with B. Sleeve 1 is arranged round the tubular ends, which sleeve is provided in the middle with a stop edge 2, so that the tubular ends can be pushed over the same distance into the sleeve. On the inner side of the sleeve is arranged a sealing ring 3 which is received in a groove 4 recessed into the inner surface of the sleeve.

Arranged on the outer side on both sides is a screw thread 5 onto which can be rotated a nut body 6 which is likewise provided with a co-acting screw thread on the inner side.

Nut body 6 has an inner surface 7 converging outwardly such that a wedge-shaped chamber is formed by the inner surface 7 of nut body 6 and the outer surface of tube B. A clamping ring 8 according to the invention is received in this chamber.

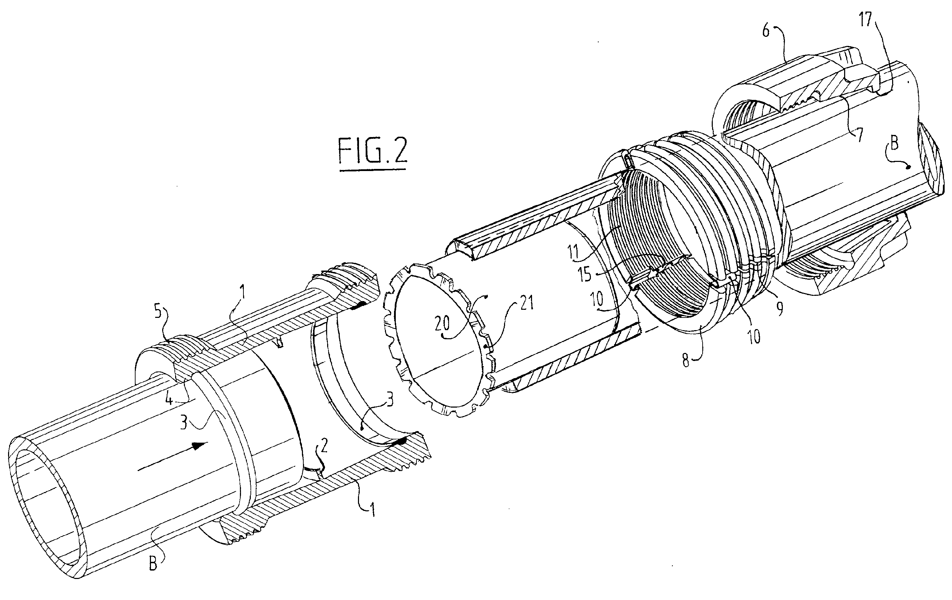

Assembly of the different components takes place as follows. Clamping ring 8 is placed loosely into the nut body beforehand, whereafter 50% of the nut body is rotated onto the sleeve. Clamping ring 8 will herein not be loaded and retains its maximum inner diameter, i.e. the maximum permissible outer diameter of the HDPE pipe plus 1 millimetre. Tubular end B is then pushed from top right in fig. 2 through nut body 6 and clamping ring 8 into the right-hand part of sleeve 1. Finally, nut body 6 is fastened more tightly onto the sleeve. Owing to the inclining inner surface of nut body 6 the clamping ring is then pressed in a manner to be further elucidated below against the outer surface of tubular ends B. It is noted that in fig. 2 the left-hand tubular end B is drawn without clamping ring 8 and nut body 6, but these components are likewise arranged thereon in the same manner as described above. A tensively strong coupling thus results between tubular ends B.

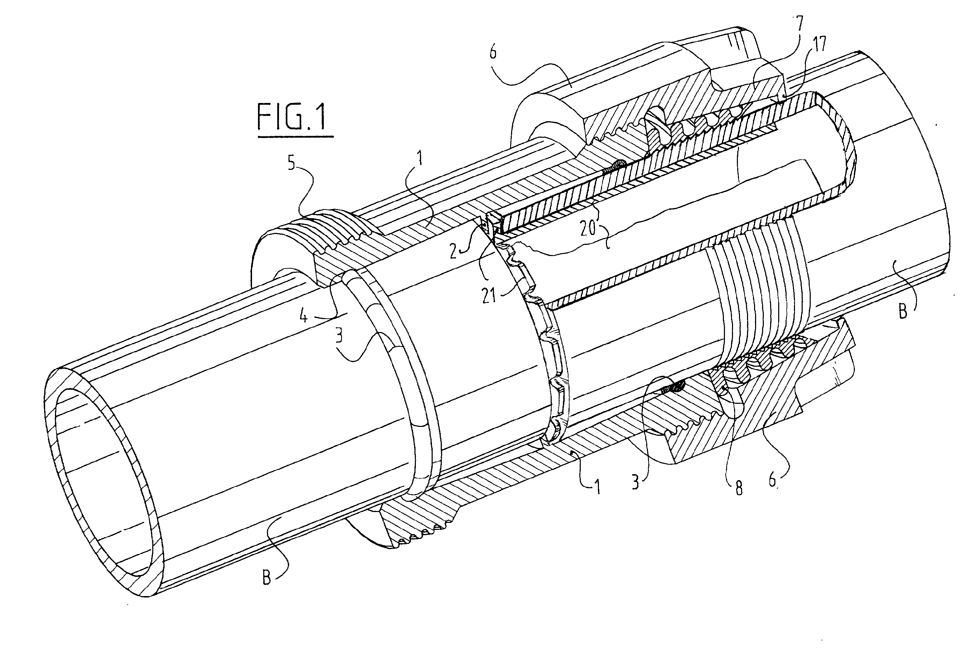

The clamping ring according to the invention is provided with one or more gaps 9, wherein a bridge piece 10 is arranged in the leading part of clamping ring 8. This bridge piece preferably has a U-shaped form and is of flexible strip material. If the ring is manufactured from plastic, the bridge piece 10 can then be formed integrally with the ring. Bridge piece 10 is flexible, which means that in the unloaded situation it presses apart the two halves of ring 8 in fig. 2. However, owing to the pressure force of nut body 6 the halves can move freely toward each other and be clamped onto the outer surface of tubular end B. For the desired clamping action the ring can be provided on the inner side with a toothing 11 which presses into the outer surface during clamping, see fig. 1. A firm, tensively strong coupling is hereby realized. Toothing 11 is however held well outside the outer surface of tubular ends B during assembly so that no axial slide traces or other damage occur on the tubular end which could result in leakage. The tubular end therefore remains clean and can be readily sealed by rubber ring 3. Friction-increasing means other than a toothing are also possible.

It is noted that gap 9 is stepped inward adjacently of the bridge piece. Two stop surfaces 15 hereby result which in the non-loaded situation of the clamping ring leave clear a specific interspace. When nut body 6 is tightened, the three sections of clamping ring 8 will move toward each other, wherein stop surfaces 15 abut against each other, thereby defining the minimum inner diameter of ring 8. No overloading of tubular end B can thereby result. The nut body 6 is provided for the same reason with a stop edge 17. So as not to pull the clamping ring 8 out of the nut body in the case of tensile strain, in which case ring 8 would damage the tubular end.

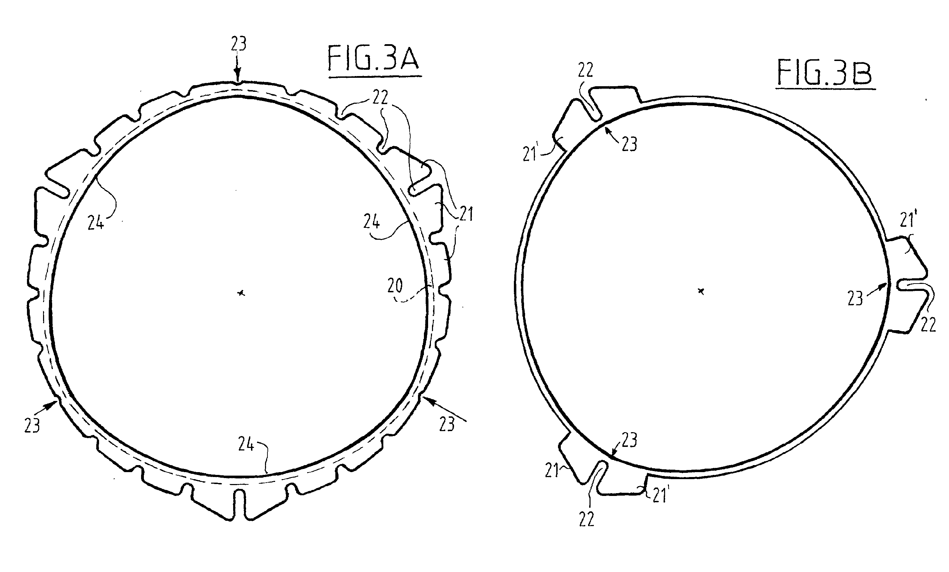

In the right-hand tube part in figures 1 and 2 is arranged a support bush 20 which has a non-round shape, see figures 3-6, when the bush is not loaded. The non-round shape is such that the outward pointing parts lie at a diameter which is equal to the maximum permissible outer diameter of the plastic tube, such as HDPE, minus the minimum permissible wall thickness thereof, while the parts lying further inward lie at a diameter which corresponds with a minimum permissible outer diameter minus a maximum permissible wall thickness.

It is noted that the left-hand tubular end B is manufactured from for instance more rigid material, for instance metal, whereby no blocking bush is required.

The blocking bush has a length such that it extends from the free end of the tube to the outer edge of clamping bush 8, wherein the one end surface of the bush is embodied with an outward directed flange 21 which is radially interrupted in regular manner at 22. This latter serves to perform the deformation of the bush body more readily.

As shown in figure 3, the bush is non-round in cross-section and has three wall parts in the form of peaks or tops 23 with small radius of curvature between which extends an inwardly displaced wall part 24 with a radius of curvature greater than that of the nominal inner diameter of tubular end B.

Figure 3B shows a variant of the bush of figure 3A. Flange 21 is here limited to only three parts 21' thereof, which are here situated close to the tops 23 of the non-round cross-section. Each part 21' is embodied with a recess 22'.

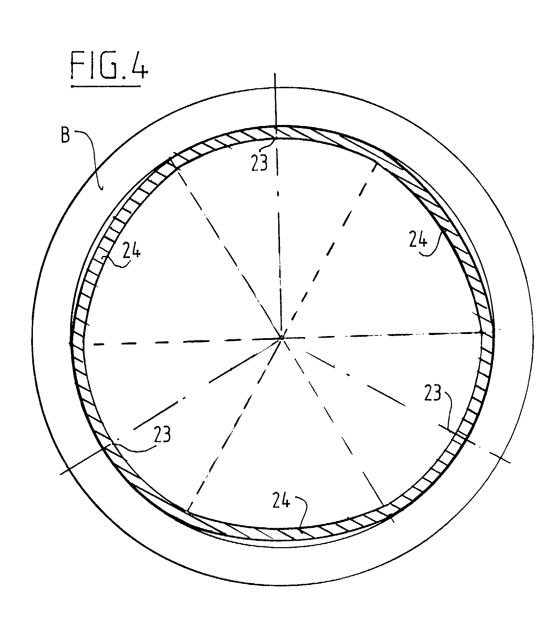

Figure 4 shows that the tops 23 are pressed inward, whereby intermediate parts 24 make contact to a greater or lesser extent with the inner wall of the tubular part.

Owing to this blocking bush, which is preferably manufactured from polyacetal, the inner side of the tubular end is supported such that it no longer yields inward, thereby preventing creep of the tubular end relative to clamping bush 8.

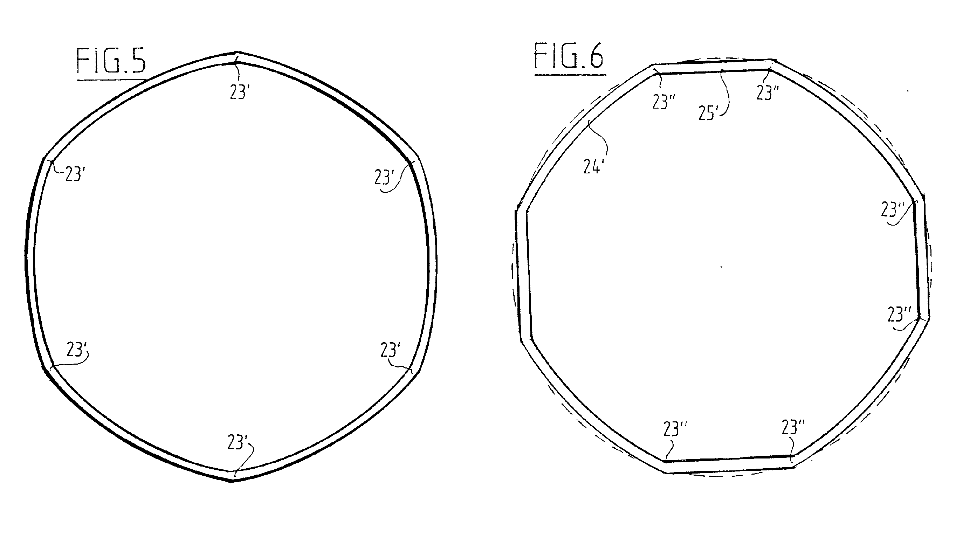

Figures 5 and 6 show variants of the cross-section of the support bush of figure 3, wherein figure 5 has six tops 23' displaced further to the outside, and the parts lying therebetween have an outwardly arched surface, although with a greater radius of curvature than that of the nominal tube diameter.

Figure 6 differs from figure 5 in that eight tops 23" are arranged, between which the outward pointing parts lying further apart have a curved coupling part and the parts lying close together have a flat part 25. Large tubular end diameters can be better supported with these latter embodiments.

The invention is not limited to the above described embodiments. Clamping ring 8 can thus be embodied in different ways within the scope of the claims. The inner surface of the ring is determined subject to the type of material of the tubular ends. The number of sections of the ring, i.e. the number of gaps, can also be freely chosen.

## Claims

1. Device for coupling in tensively strong manner two mutually in line, tubular ends of pipes for gas or liquid, which device comprises a sleeve with a screw thread pushed with clearance fit over that end in addition to a nut ring embodied with a co-acting screw thread and having an inner periphery narrowing towards the outside for receiving a split clamping ring, **characterized by** a blocking bush for arranging in the or each tubular end which in the unused situation has a shape differing from the circular cross-section such that the outward pointing parts lie at a diameter which is equal to the maximum permissible outer diameter of the plastic tube, such as HDPE, minus the minimum permissible wall thickness thereof, while the parts lying further inward lie at a diameter which corresponds with a minimum permissible outer diameter minus a maximum permissible wall thickness.

2. Device as claimed in claim 1, **characterized in that** an end of the bush is provided with an outward protruding flange, which flange has one or more radial recesses.

3. Device as claimed in claim 1 or 2, **characterized in that** the non-roundness is formed by at least two wall parts in the form of peaks with a radius of curvature smaller than that of the nominal diameter of the tubular end and intermediate curved wall parts with a greater radius of curvature.

4. Device as claimed in claim 3, **characterized in that** a straight wall part connects between two parts in the form of peaks.

5. Device as claimed in claims 1-4, **characterized in that** the or each gap of the clamping ring is provided with a bridge piece and has stop surfaces which protrude beyond the bridge piece for the purpose of bounding the minimum inner diameter of the clamping ring.

6. Device as claimed in claims 1-5, **characterized in that** the clamping ring is provided with a toothing on the inner surface directed toward the tubes for connecting.

7. Blocking bush suitable for a device as claimed in any of the foregoing claims.
